(19) Europäisches Patentamt
European Patent Office
Office européen des brevets

(11) **EP 1 936 461 A1**

(12) **EUROPEAN PATENT APPLICATION**

(43) Date of publication:
**25.06.2008 Bulletin 2008/26**

(51) Int Cl.:
***G05B 23/02*** *(2006.01)*

(21) Application number: **07254842.3**

(22) Date of filing: **12.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **22.12.2006 US 644795**

(71) Applicant: **United Technologies Corporation Hartford, CT 06101 (US)**

(72) Inventors:
• **Volponi, Allan J.**
  **West Simsbury, CT 06092 (US)**

• **Depold, Hans R.**
  **Bolton, CT 06043 (US)**
• **Siegel, Jason P.**
  **Middletown, CT 06457 (US)**
• **Hull, Jonathan A.**
  **Amston, CT 06231 (US)**

(74) Representative: **Leckey, David Herbert**
  **Frank B. Dehn & Co.**
  **St Bride's House**
  **10 Salisbury Square**
  **London EC4Y 8JD (GB)**

(54) **Gas turbine engine performance data validation**

(57) The invention validates propulsion data used in engine performance diagnostics based on heuristic knowledge of the physical relationships between engine parameters. The method identifies data anomalies, reduces overall scatter, and allows for the detection of true engine fault events. The method uses persistency to aid in differentiating between anomalous and fault event data, and it replaces anomalous data with the best-known level for that parameter, thereby preserving the overall mean signal level.

*FIG. 1*

**Description**

BACKGROUND OF THE INVENTION

The invention relates generally to the field of gas turbine engine modeling. More specifically, the invention relates to methods for validating acquired gas turbine engine data used to derive performance calculations.

Gas turbine engine condition monitoring plays an essential role in sustaining safe operation and effective maintenance while minimizing total cost of ownership. The quality of the diagnostic data affects the quality and speed of knowledge extraction from the data and the validity of all subsequent decisions that are based on the data. Statistical analysis is essential for evaluating and improving the quality of data, but the use of embedded knowledge of the underlying processes allows more dramatic improvements to data quality, the analysis, and the visibility of changes in gas turbine engine health.

Gas turbine performance diagnostics concerns itself with tracking changes in engine module performance measures, typically efficiency and flow parameters, as the engine deteriorates over time. The primary sources of information driving this methodology are measurements taking along the engine's gas path, such as temperatures, pressures, speeds, *etc.* The success of a performance tracking system depends heavily on its ability to mitigate and accommodate the effects of measurement anomalies and noise. Thus, data validation methods play an important role in the performance diagnostics process.

In the performance diagnostic process, relative engine module performance shifts are estimated on the basis of shifts in observed engine parameters from a nominal reference. This process is a multiple parameter method, which starts with a vector of measurement deltas relative to a reference baseline and produces a vector of engine module performance deltas. Inherently, the measurement vector contains noise that reduces the solution visibility for engine module performance deltas. Noise may manifest itself from several factors, such as sensor biases and drift, pilot/operator actions, un-modeled control/system features, aircraft or other separate equipment problems as well as data input errors.

Causes of data scatter include, but are not limited to weather, pilot/operator actions, un-modeled control/system features, calculation processes such as erroneous correction of the data to standard conditions, aircraft or other separate equipment problems, data input, sensor bias, sensor drift, and/or human factors. Traditional methods to account for these factors have been to treat them as sensor errors or sensor faults.

One major source of data scatter is attributed to how data is acquired. Generally, acquisition logic involves determining windows of opportunity for data acquisition where the underlying process is relatively stable. These windows usually limit recording data to periods with low rates of change in power setting and flight conditions. Data typically is sampled over a period of time after a power condition is set and the average is recorded often as a single point. The sampling and averaging technique removes higher frequency sources of system noise. If these automated methods are not available, then hand-recorded data has the potential of introducing human error as a source of noise. In addition, it is more likely that data collected manually was taken at less stable conditions.

Stable system operation requires that hysteresis be built into secondary systems such as bleed and vane modulation to prevent oscillations between operating states. Flight tests have shown that hysteresis may cause engine exhaust temperatures to vary as much as 10 °C at some lower power conditions. If data is captured at these lower power settings where modulation is occurring, then there is an increased chance of having undesirable outliers.

Engine deterioration and instrumentation drift occur over periods of days, weeks, and months, gradually changing the underlying parameter baselines. The data scatter is best evaluated relative to the slowly changing underlying baseline. This may be performed automatically by concurrently tracking the parameters through filters.

To reduce the dimensions of the diagnostic and prognostic analysis, data is typically compared to an engine model. Running the engine model at the engine data's flight condition removes flight condition, power management, and systems effects, from the problem dimensions. Since the engine, and corresponding engine model characteristics are non-linear, computing sensor deviations relative to the model produces linear sensor deltas making linear analysis applications (techniques like a Kalman filter) more reliable. Scatter introduced following a model comparison may be autocorrelated and identified, and removed employing embedded knowledge of the physical process and data corrections.

In the past, when data scatter occurred, the scatter was either accepted and flagged, or the data was removed. An expert user typically would perform an analysis to explain whether it was random scatter or scatter caused by systematic errors in other measurements. For example, an error in the recorded operating condition of the airplane (e.g. altitude, Mach number, or Total Air Temperature (TAT)) would induce a systematic autocorrelated error in many parameter changes. An error reading the engine power setting would introduce another systematic error. Capturing one value may introduce an error affecting a single parameter inconsistent with the physics of the system. Engineers learned how to recognize those errors that represented something inconsistent with the physics of the system. Those errors were removed by hand or flagged as questionable. When an individual parameter outlier was used during analysis, it corrupted the multi-measurement interrelationships. When the parameter was discarded, typically the entire multi-parameter data point was also discarded. The quality of the data analysis was degraded in either case.

Present methodologies that address this problem have involved filtering the input data and complex analytical post-processing. A more ideal solution would be one that can reduce the input data scatter, as well as detect and accommodate input anomalies without altering the effective input signal mean level.

SUMMARY OF THE INVENTION

Although there are various methods and systems that validate data used in engine performance diagnostics, such models are not completely satisfactory. The inventors have discovered that it would be desirable to have methods that leverage physical heuristics of gas turbine engine operation and data analysis experience as opposed to a strict statistical approach.

The method of the invention validates propulsion data used in engine performance diagnostics based on heuristic knowledge of the physical relationships between engine parameters. The method identifies data anomalies, reduces overall scatter, and allows for the detection of true engine fault events. The method uses persistency to aid in differentiating between anomalous and fault event data, and it replaces anomalous data with the' best-known level for that parameter, thereby preserving the overall mean signal level. The process assumes a discrete time sequence of engine data such as that acquired during stable cruise flight conditions.

One aspect of the invention provides a method for validating data acquired from a gas turbine engine. Methods according to this aspect of the invention preferably start with inputting data samples corresponding to a plurality of gas turbine engine parameter measurements, assembling the data samples in the form of a vector, comparing the plurality of engine parameter measurements with estimated parameter values producing a percent $\Delta$s vector, identifying critical engine parameters in the percent $\Delta$s vector, observing deviations in the critical engine parameters if the engine experiences a physical fault and declaring the deviations suspect, determining heuristic thresholds categorizing each data parameter sample $\Delta$, accepting the suspect data parameter sample $\Delta$ for analysis if a trend of a data parameter sample $\Delta$ is persistent over time, declaring the data parameter sample $\Delta$ an outlier if a trend of a data parameter sample $\Delta$ is not persistent over time, replacing that data parameter sample $\Delta$ when a data parameter sample $\Delta$ is declared an outlier with that parameter's best estimate prior to the sample that is an outlier, and accepting and outputting persistent data for performance analysis to avoid removing data that may indicate a systematic measuring problem.

A preferred feature of the method further comprises using a low frequency filter to track non-outlier data to provide the best estimate of a previous data parameter sample $\Delta$.

Yet another aspect of the invention provides a method for validating data acquired from a gas turbine engine. The method according to this aspect of the invention preferably starts with inputting data samples corresponding to a plurality of gas turbine engine parameter measurements, assembling the plurality of data samples in the form of vectors, wherein each vector captures a discrete sample time $k$, normalizing the plurality of engine parameter data sample vectors using estimated engine parameter values to form corresponding vectors of percent $\Delta$s, identifying critical engine parameters in the percent $\Delta$ vectors, identifying outliers in the percent $\Delta$ vectors, and removing the outliers in the percent $\Delta$ vectors.

A preferred method of identifying outliers in the percent $\Delta$ vectors further comprises deriving statistical average vectors and standard deviation vectors corresponding to each percent $\Delta$ vector, forming Low, High, InRange and Uncertain heuristic thresholds from the statistical average vectors and standard deviation vectors, classifying each percent $\Delta$ of the percent $\Delta$ vectors as either InRange, Uncertain, High, or Low, maintaining a cumulative persistence flag for each percent $\Delta$, maintaining a heuristic flag for each percent $\Delta$ vector, counting the number of critical parameters in each percent $\Delta$ vector that fall into InRange, Low or High heuristic thresholds, wherein if the number is greater than or equal to the total number of critical parameters in the percent $\Delta$ vector minus one, setting the heuristic flag to true, setting the persistence flag for a percent $\Delta$ to zero if a percent $\Delta$ is InRange or Uncertain, if the persistence flag for the percent $\Delta$ in a percent $\Delta$ vector sample $k$-1 equals 2, declaring the $k$-1 and $k$-2 samples for the percent $\Delta$ as outliers and replacing the statistical average vector values, the standard deviation vector values, and percent $\Delta$ values corresponding to the $k$-1 and $k$-2 percent $\Delta$s with those of the $k$-3 percent $\Delta$, if the persistence flag for the percent $\Delta$ in a percent $\Delta$ vector sample $k$-1 equals 1, declaring the $k$-1 sample for the percent $\Delta$ as an outlier and replacing the statistical average vector value, standard deviation vector value, and percent $\Delta$ values corresponding to the $k$-2 percent $\Delta$ with those of the $k$-1 percent $\Delta$, if the percent $\Delta$ in a percent $\Delta$ vector sample $k$ is InRange or Uncertain, declaring the percent $\Delta$ sample in no fault and updating the statistical average vector value and standard deviation vector value corresponding to the percent $\Delta$ sample $k$ normally, if the heuristic flag is false and the percent $\Delta$ in a percent $\Delta$ vector sample $k$ is classified as Very High, Very Low, Extremely High or Extremely Low, examining whether the percent $\Delta$s vector sample $k$ and the previous $k$-1 sample are in the same class and increasing the cumulative persistence flag for that percent $\Delta$ by 1, if in the same class, if the cumulative persistence flag for the percent $\Delta$ is less than 3, declaring the percent $\Delta$ values corresponding to the $k$ and the $k$-1 samples as suspected outliers, if the cumulative persistence flag for the percent $\Delta$ is greater than or equal to 3, making an extreme outlier determination, if the heuristic flag is true and the percent $\Delta$ in a percent $\Delta$s vector sample $k$ is not in the same class as the $k$-1 sample, declaring the $k$ sample as a suspected outlier and setting the cumulative persistence flag for that percent $\Delta$ to 1, and examining the $k$-1 and the k-2 samples if both were suspect and examining the class of the $k$-1 and the k-2 samples if in the same class and if not, declaring the $k$-1 sample as an outlier, if the $k$-1 and the $k$-2 samples were in the same class and if the cumulative persistence flag for that percent $\Delta$ at $k$-1 is less than 3, declaring the $k$-1 and the $k$-2 samples as outliers, and examining the $k$-1 and the $k$-2 samples if not suspect and if the $k$-1 sample is InRange or Uncertain, declaring the $k$-1 sample as an outlier.

Another preferred feature of the method is where the extreme outlier determination further comprises forming extreme heuristic thresholds, classifying the percent $\Delta$ in a percent $\Delta$s vector k-2 sample as extreme or not, if the k-2 sample is not Extreme, one of the following conditions exist, if the $k$-1 sample is Extreme and the k sample is not Extreme, declaring a condition of High for the k-2 sample, Extreme for the $k$-1 sample, and High for the k sample, if the cumulative persistence flag for the percent $\Delta$ k sample is greater than 3 and the $k$-3 sample is Extreme, declaring a condition of Extreme for the $k$-3 sample, High for the $k$-2 sample, Extreme for the $k$-1 sample, and High for the $k$ sample, wherein the trend represents a physical fault, if either the cumulative persistence flag for the percent $\Delta$ $k$ sample is not greater than 3 or the $k$-3 sample is not Extreme, declaring a condition of not Extreme for the $k$-3 sample, High for the $k$-2 sample, Extreme for the $k$-1 sample, and High for the $k$ sample, wherein the $k$-1 sample is an outlier, if the $k$-1 sample is not Extreme, or the $k$ sample is Extreme, declaring a physical fault, if the $k$-2 sample is Extreme, one of the following conditions exist, if the cumulative persistence flag for the percent $\Delta$ $k$ sample is greater than 3, examining the $k$ sample and the $k$-1, k-2 and k-3 samples, if the $k$-1 sample or the $k$-3 sample is Extreme, declaring a physical fault, if the $k$-1 sample is not Extreme and the $k$-3 sample is not Extreme and the $k$ sample is not Extreme, declaring the $k$-2 sample an outlier, if the $k$-1 sample is not Extreme and the $k$-3 sample is not Extreme and the $k$ sample is Extreme, declaring a physical fault, if the cumulative persistence flag for the percent $\Delta$ $k$ sample is 3 and the $k$-1 sample is Extreme, declaring a condition of Extreme for the $k$-2 sample, Extreme for the $k$-1 sample and High for the $k$ sample, wherein the trend represents a physical fault, if the cumulative persistence flag for the percent $\Delta$ $k$ sample is 3 and the $k$-1 sample is Extreme, declaring a condition of Extreme for the $k$-2 sample, Extreme for the $k$-1 sample and High for the $k$ sample, wherein the trend represents a physical fault, and if the cumulative persistence flag for the percent $\Delta$ at $k$ is 3 and the $k$-1 sample is not Extreme and the $k$ sample is not Extreme, declaring a condition of Extreme for the $k$-2 sample, High for the $k$-1 sample and High for the $k$ sample, wherein the $k$-2 sample is an outlier.

The details of one or more embodiments of the invention are set forth in the accompanying drawings and the description below. Other features, objects, and advantages of the invention will be apparent from the description and drawings, and from the claims.

BRIEF DESCRIPTION OF THE DRAWINGS

FIG. 1 is an exemplary method.

FIG. 2 is an exemplary illustration of suspect patterns for critical engine parameters.

FIG. 3 is an exemplary list of heuristic data bands.

FIG. 4 is an exemplary persistency check method.

FIG. 5 is an exemplary extreme outlier determination method.

DETAILED DESCRIPTION

Embodiments of the invention will be described with reference to the accompanying drawing figures wherein like numbers represent like elements throughout. Further, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. The terms "mounted," "connected," and "coupled" are used broadly and encompass both direct and indirect mounting, connecting, and coupling. Further, "connected" and "coupled" are not restricted to physical or mechanical connections or couplings.

The invention is not limited to any particular software language described or implied in the figures. A variety of alternative software languages may be used for implementation of the invention.

The invention is a modular framework and may be deployed as software as an application program tangibly embodied on a program storage device. The application code for execution can reside on a plurality of different types of computer readable media known to those skilled in the art.

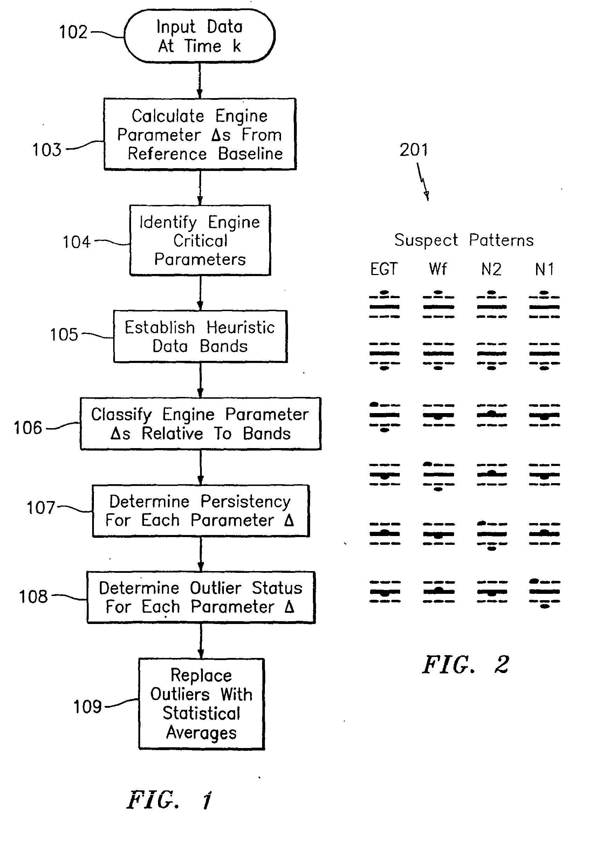

The method of the invention is shown in FIG. 1. Input data (step 102) is in the form of a vector of gas path parameters. Data such as spool speeds, interstage temperatures and pressures, etc., is collected during a stable cruise condition at time $k$. The data represents a single data sample, or a time-averaged snapshot, and is not a continuously sampled data stream. Comparing these measurement parameters to estimated parameter values form a baseline engine model operating at the same flight and ambient conditions. The comparison produces a vector of percent $\Delta$s, or residuals (step 103).

Among the set of gas path parameters, critical engine parameters (step 104) are required for safe operation of the engine and are therefore always available to the pilot (in the cockpit) as well as being available for capture and subsequent calculations. These parameters may differ from one engine type to another, but typically comprise spool speeds, fuel mass flow rate, and exhaust gas temperature (EGT) for aero-engine applications. These parameters are deemed critical since they are necessary for safe engine operation.

From a data validation perspective, they are particularly important in the following sense. If the engine experiences a physical fault of some kind that affects its thermodynamic performance, for example, damaging material ingested into the engine, i.e., Foreign Object Damage (FOD), or fractured blade or vane material liberated into the gas path, i.e. Domestic Object Damage (DOD), or a system fault such as a engine bleed valve fault, turbine cooling fault, variable geometry fault, etc., an attendant deviation in the critical parameters will be observed. For physical faults such as those listed above, it would not be expected that all of the critical parameters would shift significantly high or low (relative to baseline) or that only one critical parameter would shift significantly (high or low) while the others remained fairly constant.

FIG. 2 shows these suspect patterns 201 for a typical critical parameter set for a twin-spool turbofan engine. In this figure, the solid line represents a smoothed level of the parameter delta under consideration. This may take many forms, but typically some form of averaging is used such as a moving average or an exponential average. The dotted lines represent a statistical threshold for the parameter delta under consideration. This may take several forms as well, but typically represents a predefined number of standard deviations from the mean level where the standard deviation is computed (typically) as a moving window standard deviation or an exponential standard deviation. The dots indicate different possibilities for each of the (critical) parameter deltas. For example, the first indicates all of the critical parameter deltas being simultaneously high, the second indicates all of the critical parameter deltas being low, the third indicates the EGT parameter delta being either high or low while the remaining critical parameter delta are within range, etc.

EGT represents exhaust gas temperature, Wf represents mass fuel flow, N1 represents low spool speed, and N2 represents high spool speed. In these situations, the threshold for declaring these points as suspect may be lowered from that which would normally be prescribed from statistical considerations alone.

Heuristically determined thresholds, or data bands (step 105), may be established in which each data sample parameter $\Delta$ may be categorized (step 106). Suspicious patterns, such as those in FIG. 2 aid in determining whether or not the current data sample, which is a vector, has an outlier parameter or not. If the pattern is persistent (step 107) over time, the process accepts the suspected data for possible trend detection and subsequent analysis. If the pattern is not persistent, and has no power system, external system, or equipment signature, the sample may be declared a true outlier with a higher degree of confidence (step 108).

When a data sample is declared an outlier, it is replaced by that parameter's best estimate (step 109) prior to the outlier sample. The best estimate is the previous state tracked using a low frequency filter, for example, an exponential average, of non-outlier data. To avoid removing data that may be a systematic measuring problem, the method accepts the physically unexplainable data when it is persistent and may be caused by an instrumentation system, data system, or other systematic error.

Engine data at time $k$ comprises a vector of gas path parameter measurement snapshots. The snapshots may be time-averaged samples acquired during a stable cruise flight condition. The parameters under consideration may vary according to engine type and application, but usually comprise spool speeds, fuel mass flow, and interstage temperatures and pressures, as well as parameters describing flight and ambient conditions. The measured gas path parameters are assembled as an $m \times 1$ column vector, where $m$ is the number of measured gas path parameters.

For the method to be applied to all gas turbine engine types and operating conditions, it is convenient to normalize the data to percent $\Delta$s (deviations) from an assumed reference baseline. This reference may take many forms, but is typically an engine model representing nominal behavior at the flight condition dictated by the measured data. The percent $\Delta$s are computed (step 103) for each gas path parameter and stored in the $m \times 1$ vector, $Z_k$. The subscript $k$ refers to a sample number where $k=1,2,3,...,K$ .

A subset of the gas path parameters that are measured form a set of critical parameters, $m_{critical}$, where $m_{critical} \leq M$, which are required flight measurements and are always available. These critical parameters may vary according to engine type and application, but usually comprise spool speeds N1, N2, fuel mass flow Wf, and engine exhaust gas temperature (EGT). There may be $m_{critical}$ components in a parent $\Delta$ vector $Z_k$ (step 104).

The $Z_k$ vectors form a time sequence of gas path parameters that may be trend and used to track engine performance deterioration, detect physical faults, and perform fault isolation in the event of a fault detection. Available methods to perform gas path performance deterioration trending, fault detection and fault isolation may be used such as histograms and graphical analysis.

The method performs data validation and enables better detection, reduced false alarms, and reduces overall data scatter to support a more accurate performance deterioration assessment. A reduction in the measurement $\Delta$ ($Z_k$) data will drive a reduction in the performance assessment, no matter what method is used to obtain this assessment. This reduction is achieved by identifying and removing outliers in the $Z_k$ data stream and not confusing actual fault induced shifts (in the $Z_k$ data) as outlier data.

Once the $Z_k$ vectors are formed, a statistical average and standard deviation is maintained. The method employs an exponential average $A_k(i)$,

$$A_k(i) = \alpha A_{k-1}(i) + (1-\alpha)Z_k(i) \, , \qquad (1)$$

and a standard deviation $S_k(i)$,

$$S_k(i) = \sqrt{\alpha[S_{k-1}(i)]^2 + (1-\alpha)[A_k(i) - Z_k(i)]^2} \, , \qquad (2)$$

where $i$ =1, 2, 3, ..., $m$ for the $i^{th}$ parameter in the vector and $\alpha$ is a predefined exponential average constant.

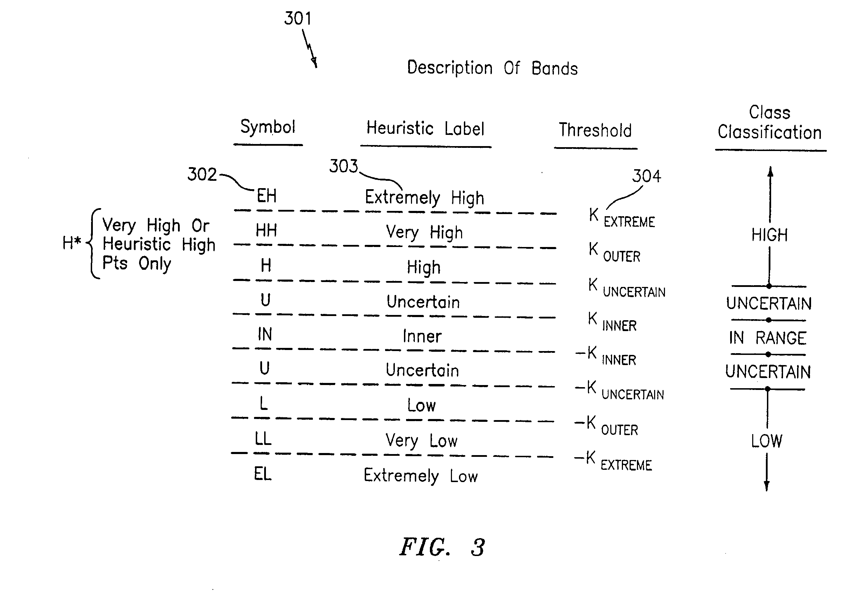

Heuristic data bands, or thresholds, are assembled (step 105), using these quantities for the purpose of classifying the $Z_k$ data to enable the identification of outlier data as shown in FIG. 3. These bands are referenced by symbols 302, associated heuristic labels 303, and prescribed by threshold values 304. The threshold values 304 are sigma intervals about a mean (percent A) level for each parameter of the $Z_k$ vector. For example, the first and innermost band is defined as

$$-\kappa_{INNER}S_{k-3}(i) \le Z_k(i) - A_{k-3}(i) \le \kappa_{INNER}S_{k-3}(i) \qquad , \qquad (3)$$

where $i$ =1, 2, 3, ..., $m$ for the $i^{th}$ parameter of the $k^{th}$ data point. The center of the band is the mean (percent $\Delta$). $A_{k-3}$ and $S_{k-3}$ define threshold bands to classify the $k^{th}$ sample vector $Z_k$. The purpose is to withhold any influence of the past three data samples, *i.e.*, *k*, *k*-1, and *k*-2 since the method of determining whether a parameter sample is an outlier depends on heuristic techniques that examine for the presence, or lack of presence, of persistency in magnitude among the past three consecutive samples (*k*, *k*-1, *k*-2).

FIG. 3 shows nine data comparison bands, EL for Extremely Low, LL for Very Low, L for Low, IN for Inner, U for Uncertain, H for High, HH for Very High, and EH for Extremely High. Predefined weights - kappa values ($\kappa$), are chosen by a user/designer. Exemplary weights may be

$$\begin{aligned} \kappa_{INNER} &= 0.8, \\ \kappa_{UNCERTAIN} &= 1.8, \\ \kappa_{OUTER} &= 2.5, and \\ \kappa_{EXTREME} &= 4.5. \end{aligned} \qquad (4)$$

The critical parameters, $m_{critical}$, play a special role in the classification method. The classification method begins with classifying data as either being InRange, Uncertain, High or Low.

If for the $i^{th}$ parameter of the $k^{th}$ data sample $Z_k(i)$,

$$-\kappa_{INNER}S_{k-3}(i) \le Z_k(i) - A_{k-3}(i) \le \kappa_{INNER}S_{k-3}(i) \, , \qquad (5)$$

then $Z_k(i)$ is classified as InRange. If

$$Z_k(i) - A_{k-3}(i) \leq -\kappa_{Uncertain} S_{k-3}(i) , \qquad (6)$$

then $Z_k(i)$ is classified as Low, or Very Low, or Extremely Low. If

$$Z_k(i) - A_{k-3}(i) \geq \kappa_{Uncertain} S_{k-3}(i) , \qquad (7)$$

then $Z_k(i)$ is classified as High, or Very High, or Extremely High. Otherwise, $Z_k(i)$ is classified as Uncertain.

During the classification of the $k^{th}$ data point $Z_k$, a counter counts the number of critical parameters $m_{critical}$ that fall into each band.

If the total number of critical parameters $m_{critical}$ for a $Z_k$, at time $k$, that fall into categories InRange, Low, or High is greater than or equal to $m_{critical}$-1, then a heuristics flag is set to true, otherwise it is set to false. A heuristics flag is set for each vector. As shown in FIG. 2, a heuristics flag value of true will correspond to a data suspect situation. This flag will be used in determining persistency as described below.

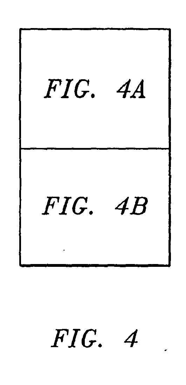

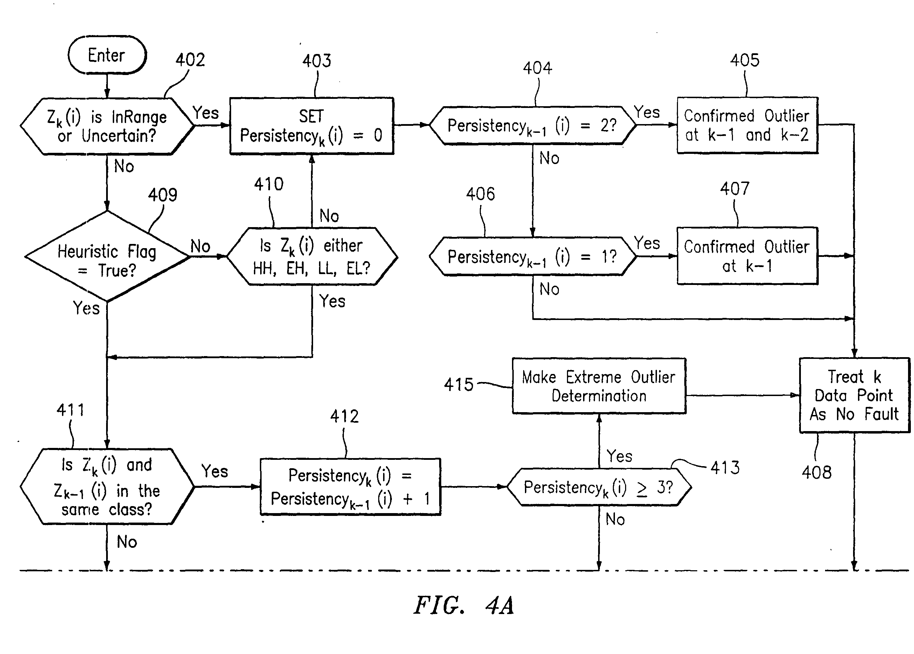

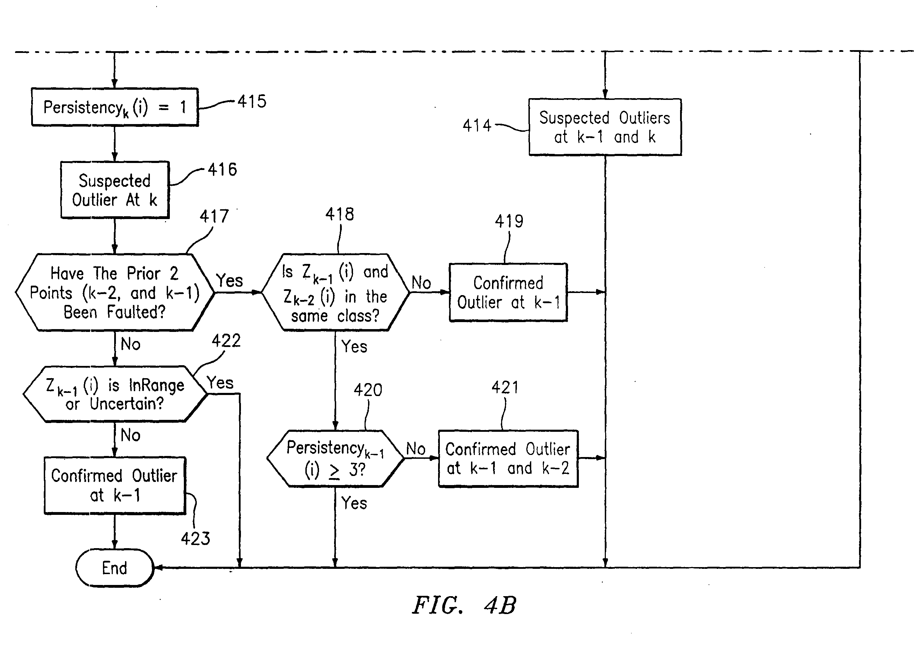

The persistency method shown in FIG. 4 determines the persistency that a parameter experiences in a given category (step 107). A persistency flag for each parameter is maintained over time. The persistency flag for the $i^{th}$ parameter at time $k$ is denoted by $Persistency_k(i)$ and is an integer value counter denoting the cumulative number of consecutive discrete time samples for which the $i^{th}$ parameter is suspected of being an outlier or an anomalous data sample. This method is performed for each parameter in $Z_k(i)$ for each sample $k$.

The parameter $\Delta$ data, $Z_k(i)$, is queried as to whether or not it is InRange or Uncertain (step 402). If it has been classified as either InRange or Uncertain, the persistency flag is initialized or reset to zero (step 403). If the persistency flag of the $k$-1 data point is equal to 2 (step 404), the $k$-1 and the $k$-2 data samples will be classified as outliers (step 405). The action taken will be to reset statistical quantities and replace these outlier values with average values from $k$-3,

$$confirmed\ outlier\ at\ k-1\ and\ k-2\ , \quad \begin{aligned} A_{k-2}(i) &= A_{k-3}(i), \\ A_{k-1}(i) &= A_{k-3}(i), \\ S_{k-2}(i) &= S_{k-3}(i), \\ S_{k-1}(i) &= S_{k-3}(i), \\ Z_{k-2}(i) &= A_{k-3}(i),\ and \\ Z_{k-1}(i) &= A_{k-3}(i). \end{aligned} \qquad (8)$$

The last two lines of (8) replace determined outliers $Z_{k-2}(i)$ and $Z_{k-1}(i)$ with the best estimate of what those parameters should be, *i.e.* the corresponding averages $A_{k-3}(i)$ at $k$-3 for subsequent analysis. If the persistency of the $k$-1 data point was not 2 (step 404) but equal to 1 (step 406), the $k$-1 data sample is declared an outlier (step 407),

$$confirmed\ outlier\ at\ k-1\ , \quad \begin{aligned} A_{k-1}(i) &= A_{k-2}(i), \\ S_{k-1}(i) &= S_{k-2}(i), and \\ Z_{k-1}(i) &= A_{k-2}(i). \end{aligned} \qquad (9)$$

The last line of (9) replaces determined outlier $Z_{k-1}(i)$ with the best estimate of what that that parameter should be, i.e. the corresponding average $A_{k-2}(i)$ at $k$-2 for subsequent analysis. Since $Z_k(i)$ was found to be InRange or Uncertain (step 402), the $k$ data sample will be treated as a no fault data sample (step 408), and the statistical quantities $A_k$ and $S_k$ will be updated according to (1) and (2).

If $Z_k(i)$ was found not to be InRange or Uncertain (step 402), the heuristics flag is examined (step 409). If the heuristics flag is false, then the critical parameters did not form any of the suspicious patterns shown in FIG. 2.

For this case, $Z_k(i)$ will have to be either Very High, Very Low, Extremely High, or Extremely Low in order to be considered as a potential outlier (step 410). If $Z_k(i)$ is neither, it will be treated as an acceptable data sample and assigned a persistency flag value of zero (step 403).

The reason for this is that in this latter situation, the critical parameters must be dispersed across the data bands since the heuristics flag is false, indicating the potential presence of an underlying physical engine fault, so that it would be reasonable for any of the parameter Δs to be either High or Low.

If the heuristics flag is true indicating suspicious data, or false with the current point $Z_k(i)$ being either Very High, Very Low, Extremely High, or Extremely Low, the method proceeds by examining whether the present data sample $Z_k(i)$ and the previous data sample $Z_{k-1}(i)$ are in the same class (step 411). If $Z_k(i)$ and $Z_{k-1}(i)$ are in the same class, the current persistency may be increased by 1 (step 412). A check is performed to see if the current persistency is three or greater (step 413).

If the $Persistency_k(i) < 3$, there are suspected outliers at $k$ and $k$-1. In this case, the method returns for the next data sample.

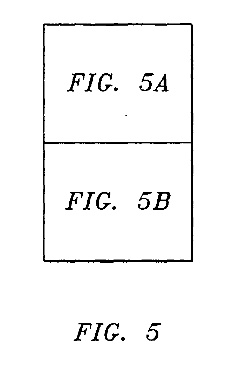

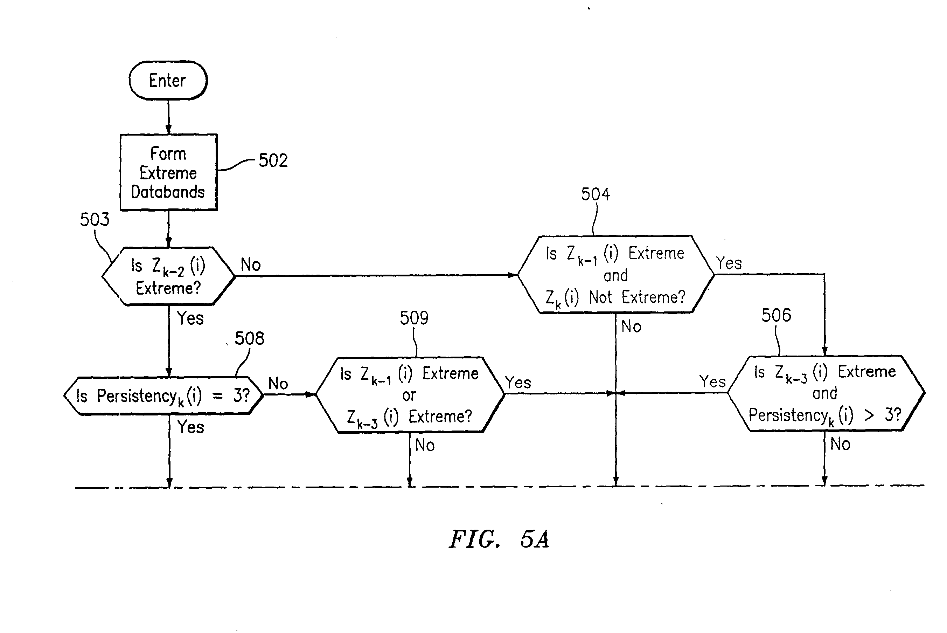

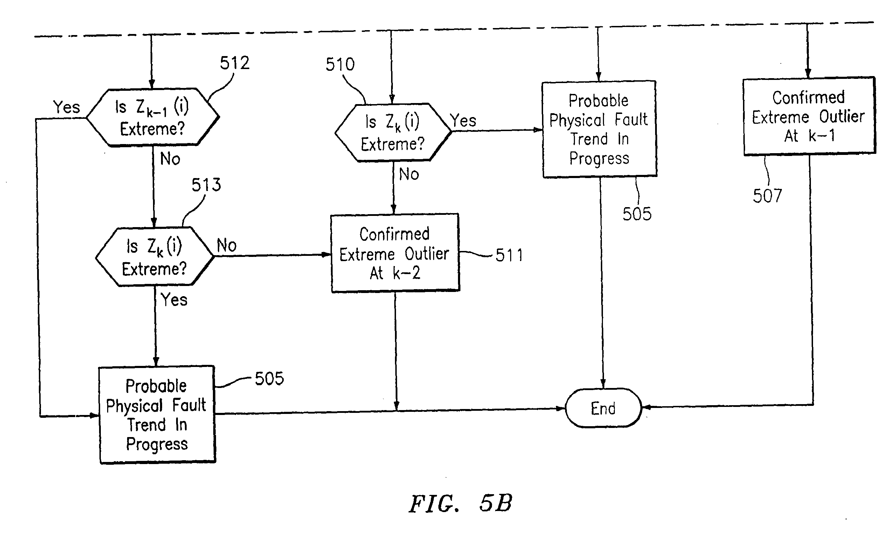

If the $Persistency_k(i) \geq 3$, there may be a possible physical fault trend in progress. There is always the possibility of having one or more extreme (outlier) points within a physical fault trend. In order to support the subsequent trend analysis and fault isolation in this situation, it is necessary to identify these extreme points and determine if they are outliers within the data trend (step 415). The heuristics-based method for performing the identification is shown in FIG. 5. In any event, the current data sample $k$ is treated as normal data.

If the current and past data samples are not in the same class (step 411), the $k$ sample has a suspected outlier (step 416), and its persistency flag is set to 1 (step 415).

Since the current time sample $k$ is suspect, samples $k$-1 and $k$-2 are examined (step 417). If both were suspect, their class is examined (step 418). If the samples do not belong to the same class, data sample $k$-1, $Z_{k-1}(i)$, is an outlier since it has been suspect (step 417) and is not of the same class as either $Z_{k-2}(i)$ (step 418) or $Z_k(i)$ (step 411). As an outlier, (9) would be performed.

If suspect data samples $k$-1 and $k$-2 were in the same class (step 418), if the persistency of the $k$-1 data point is less than three (step 420), its persistency must be 2, i.e., $Persistency_{k-1}(i)=2$ and samples $k$-1 and $k$-2 may be declared outliers (step 421). As outliers, (8) would be performed.

If the data points $k$-1 and $k$ -2 were not both suspect, then if $Z_{k-1}(i)$ is not InRange or Uncertain, it must be an outlier (step 423). This is because $Z_k(i)$ is not InRange or Uncertain (step 402), and $Z_k(i)$ and $Z_{k-1}(i)$ are not in the same class (step 411)). If $Z_{k-1}(i)$ is InRange or Uncertain, no further determinations (beyond step 416) may be made and the method returns for the next data sample.

The method for determining outliers when the persistency of the current $k$ data point is greater than 3 (step 415), is shown in FIG. 5. Since the current persistency is greater than 3, the method examines the current sample and the three previous data samples, $k$ , $k$-1, $k$-2, and $k$-3. To describe this process, the following notation will be used.

$$H* \quad EH \quad H \quad EH \quad \longleftarrow \text{Describes which band this point is at}$$

$$k\text{-}3 \quad k\text{-}2 \quad k\text{-}1 \quad k \quad \longleftarrow \text{Time Step of Point}$$

The symbols are defined in FIG. 3, where $H*$ indicates either an $HH$ condition or an $H$ condition if a heuristic flag was set to true. The persistency (*at k*) being 4 or more indicates that the $k, k$-1, $k$-2 , and $k$-3 data samples will either be on the High side or the Low side.

The following illustrates the method using only the High side of the band. The mirror image (all Low) applies equally as well.

The Extreme outlier determination method forms Extreme data bands (step 502) i.e., any $Z_k(i)$ not satisfying

$$-\kappa_{Extreme}S_{k-4}(i) \leq Z(i) - A_{k-4}(i) \leq \kappa_{Extreme}S_{k-4}(i) , \qquad (10)$$

where $i$ =1, 2, ..., $m$ will be considered to be Extremely Low or Extremely High. The $Z(i)$ may either be $Z_k(i)$, $Z_{k-1}(i)$, $Z_{k-2}(i)$, or $Z_{k-3}(i)$. The subscript of $k$-4 for the average and standard deviation in (10) is intentional. This will insure that the statistical bands will not be corrupted by the $k, k$-1, $k$-2, and k-3 data samples.

If $Z_{k-2}(i)$ is not Extremely Low or Extremely High (step 503), one of the following permutations, or configurations, is present. HH is covered by H* (see FIG. 3). Since k-2 is not Extreme, it must be H* leaving k-1 and k to give the four possible configurations.

$$\underbrace{H^*}_{k-2} \quad \underbrace{H^*}_{k-1} \quad \underbrace{H^*}_{k}$$

$$\underbrace{H^*}_{k-2} \quad \underbrace{H^*}_{k-1} \quad \underbrace{EH}_{k}$$

$$\underbrace{H^*}_{k-2} \quad \underbrace{EH}_{k-1} \quad \underbrace{H^*}_{k}$$

$$\underbrace{H^*}_{k-2} \quad \underbrace{EH}_{k-1} \quad \underbrace{EH}_{k}$$

If $Z_{k-1}(i)$ is Extreme and $Z_k(i)$ is not Extreme (step 504), then

$$\underbrace{}_{k-3} \quad \underbrace{H^*}_{k-2} \quad \underbrace{EH}_{k-1} \quad \underbrace{H^*}_{k}$$

where k-3 may be any value. If $Z_{k-3}(i)$ is Extreme and $Persistency_k > 3$ (step 506), then

$$\underbrace{EH}_{k-3} \quad \underbrace{H^*}_{k-2} \quad \underbrace{EH}_{k-1} \quad \underbrace{H^*}_{k}$$

For this case, a declaration regarding any outliers cannot be made and the data must be accepted as potentially representing a physical fault trend condition. If, however (step 506) is false, then

$$\underbrace{not\ EH}_{k-3} \quad \underbrace{H^*}_{k-2} \quad \underbrace{EH}_{k-1} \quad \underbrace{H^*}_{k}.$$

In this case, the k-1 sample may be considered to be an Extreme outlier (step 507). The action taken in order to preserve the trend for subsequent fault isolation analysis is,

$$Z_{k-1}(i) = average(Z_k(i), Z_{k-2}(i)), \qquad (11)$$

$$A_{k-1}(i) = \alpha A_{k-2}(i) + (1-\alpha)Z_{k-1}(i), \qquad (12)$$

and

$$S_{k-1}(i) = \sqrt{\alpha[S_{k-2}(i)]^2 + (1-\alpha)[A_{k-1}(i) - Z_{k-1}(i)]^2}. \qquad (13)$$

Returning to previous decision (step 504), if it is false that $Z_{k-1}(i)$ is Extreme and $Z_k(i)$ is not Extreme then

$$\underbrace{H*}_{k-2} \quad \underbrace{H*}_{k-1} \quad \underbrace{H*}_{k}$$

$$\underbrace{H*}_{k-2} \quad \underbrace{H*}_{k-1} \quad \underbrace{EH}_{k}$$

$$\underbrace{H*}_{k-2} \quad \underbrace{EH}_{k-1} \quad \underbrace{EH}_{k}$$

In this case, it cannot confidently be declared that there are any Extreme outliers and must treat the sequence as a potential physical fault trend condition (step 505).

If $Z_{k-2}(i)$ (step 503) is Extreme, then if $Persistency_k \neq 3$, (step 508), it must be greater than 3 and one of the following conditions exists

$$\underbrace{H*}_{k-3} \quad \underbrace{EH}_{k-2} \quad \underbrace{EH}_{k-1} \quad \underbrace{H*\ or\ EH}_{k}$$

$$\underbrace{EH}_{k-3} \quad \underbrace{EH}_{k-2} \quad \underbrace{H*}_{k-1} \quad \underbrace{H*\ or\ EH}_{k}$$

$$\underbrace{H*}_{k-3} \quad \underbrace{EH}_{k-2} \quad \underbrace{H*}_{k-1} \quad \underbrace{H*\ or\ EH}_{k}$$

$$\underbrace{EH}_{k-3} \quad \underbrace{EH}_{k-2} \quad \underbrace{EH}_{k-1} \quad \underbrace{H*\ or\ EH}_{k}$$

If either $Z_{k-1}(i)$ or $Z_{k-3}(i)$ are Extreme, then this reduces to

$$\underbrace{H*}_{k-3} \quad \underbrace{EH}_{k-2} \quad \underbrace{EH}_{k-1} \quad \underbrace{H*\ or\ EH}_{k}$$

$$\underbrace{EH}_{k-3} \quad \underbrace{EH}_{k-2} \quad \underbrace{H*}_{k-1} \quad \underbrace{H*\ or\ EH}_{k}$$

$$\underbrace{EH}_{k-3} \quad \underbrace{EH}_{k-2} \quad \underbrace{EH}_{k-1} \quad \underbrace{H*\ or\ EH}_{k}$$

It may not be confidently declared that there are any Extreme outliers and must treat the sequence as a potential physical fault trend condition (step 505).

If neither $Z_{k-1}(i)$ or $Z_{k-3}(i)$ are Extreme, then the possibilities reduce to

$$\underbrace{H*}_{k-3} \quad \underbrace{EH}_{k-2} \quad \underbrace{H*}_{k-1} \quad \underbrace{H*\ or\ EH}_{k}$$

If $Z_k(i)$ is Extreme (step 510), it may not be confidently declared that there are any Extreme outliers and must treat the sequence as a potential physical fault trend condition (step 505). If, however, $Z_k(i)$ is not Extreme (step 510), then it may be concluded that an Extreme outlier at $k$-2. The action taken in order to preserve the trend for subsequent fault isolation analysis is

$$Z_{k-2}(i) = average\left(Z_k(i), Z_{k-1}(i)\right), \tag{14}$$

$$A_{k-2}(i) = \alpha A_{k-3}(i) + (1-\alpha)Z_{k-2}(i) \, , \qquad (15)$$

and

$$S_{k-2}(i) = \sqrt{\alpha [S_{k-3}(i)]^2 + (1-\alpha)[A_{k-2}(i) - Z_{k-2}(i)]^2} \; . \qquad (16)$$

If $Persistency_k = 3$ (step 508), and if $Z_{k-1}(i)$ is Extreme, (step 512),

$$\underbrace{EH}_{k-2} \quad \underbrace{EH}_{k-1} \quad \underbrace{H*}_{k}$$

in which case it cannot be confidently declared that there are any Extreme outliers and must treat the sequence as a potential physical fault trend condition (step 505). If $Z_{k-1}(i)$ is not Extreme (step 512),

$$\underbrace{EH}_{k-2} \quad \underbrace{H*}_{k-1} \quad \underbrace{H*}_{k}$$
$$\underbrace{EH}_{k-2} \quad \underbrace{H*}_{k-1} \quad \underbrace{EH}_{k}$$

and if $Z_k(i)$ is not Extreme (step 513),

$$\underbrace{EH}_{k-2} \quad \underbrace{H*}_{k-1} \quad \underbrace{H*}_{k}$$

and we can declare $Z_{k-2}(i)$ as an Extreme outlier, and perform (14), (15) and (16).

One or more embodiments of the present invention have been described. Nevertheless, it will be understood that various modifications may be made without departing from the scope of the invention. Accordingly, other embodiments are within the scope of the following claims.

**Claims**

1. A method for validating data acquired from a gas turbine engine comprising:

inputting data samples corresponding to a plurality of gas turbine engine parameter measurements;
assembling the data samples in the form of a vector;
comparing the plurality of engine parameter measurements with corresponding estimated parameter values producing a percent $\Delta s$ vector;
identifying critical engine parameters in the percent $\Delta s$ vector;
observing deviations in the critical engine parameters if the engine experiences a physical fault and declaring the deviations suspect;
determining heuristic thresholds categorizing each data parameter sample $\Delta$ in the percent $\Delta s$ vector;
accepting the suspect data parameter sample $\Delta$ for analysis if a trend of a data parameter sample $\Delta$ is persistent over time;
declaring the data parameter sample $\Delta$ an outlier if the trend of a data parameter sample $\Delta$ is not persistent over time;

replacing that data parameter sample Δ when a data parameter sample Δ is declared an outlier with that parameter's best estimate prior to the sample that is an outlier; and

accepting and outputting persistent data for performance analysis to avoid removing data that may indicate a systematic measuring problem.

2. The method according to claim 1 wherein the percent Δs vector represents a normalized, baseline engine model.

3. The method according to claim 2 wherein deviations in the critical parameters represent physical faults that affect the engine's thermodynamic performance.

4. The method according to claim 3 wherein the data samples are collected during a stable cruise condition.

5. The method according to claim 4 wherein critical parameters comprise spool speeds, fuel mass flow rate, and exhaust gas temperature (EGT).

6. The method according to claim 5 wherein the heuristic threshold for declaring a data parameter sample Δ suspect may be lowered from that which would normally be prescribed from statistical considerations.

7. The method according to claim 6 further comprising using a low frequency filter to track non-outlier data to provide the best estimate of a previous data parameter sample Δ.

8. A method for validating data acquired from a gas turbine engine comprising:

inputting data samples corresponding to a plurality of gas turbine engine parameter measurements;
assembling the plurality of data samples in the form of vectors, wherein each vector captures a discrete sample time $k$;
normalizing the plurality of engine parameter data sample vectors using estimated engine parameter values to form corresponding vectors of percent Δs;
identifying critical engine parameters in the percent Δ vectors;
identifying outliers in the percent Δ vectors; and
removing the outliers in the percent Δ vectors.

9. The method according to claim 8 wherein identifying outliers in the percent Δ vectors further comprises:

deriving statistical average vectors and standard deviation vectors corresponding to each percent Δ vector;
forming Low, High, InRange and Uncertain heuristic thresholds from the statistical average vectors and standard deviation vectors;
classifying each percent Δ of the percent Δ vectors as either InRange, Uncertain, High, or Low;
maintaining a cumulative persistence flag for each percent Δ;
maintaining a heuristic flag for each percent Δ vector;
counting the number of critical parameters in each percent Δ vector that fall into InRange, Low or High heuristic thresholds, wherein if the number is greater than or equal to the total number of critical parameters in the percent Δ vector minus one, setting the heuristic flag to true;
setting the persistence flag for a percent Δ to zero if a percent Δ is InRange or Uncertain;
if the persistence flag for the percent Δ in a percent Δ vector sample $k$-1 equals 2, declaring the $k$-1 and $k$-2 samples for the percent Δ as outliers and replacing the statistical average vector values, the standard deviation vector values, and percent Δ values corresponding to the $k$-1 and $k$-2 percent Δs with those of the $k$-3 percent Δ ;
if the persistence flag for the percent Δ in a percent Δ vector sample $k$-1 equals 1 declaring the $k$-1 sample for the percent Δ as an outlier and replacing the statistical average vector value, standard deviation vector value, and percent Δ values corresponding to the $k$-2 percent Δ with those of the $k$-1 percent Δ;
if the percent Δ in a percent Δ vector sample $k$ is InRange or Uncertain, declaring the percent Δ sample in no fault and updating the statistical average vector value and standard deviation vector value corresponding to the percent Δ sample $k$ normally;
if the heuristic flag is false and the percent Δ in a percent Δ vector sample $k$ is classified as Very High, Very Low, Extremely High or Extremely Low, examining whether the percent Δs vector sample $k$ and the previous $k$-1 sample are in the same class and increasing the cumulative persistence flag for that percent Δ by 1, if in the same class;
if the cumulative persistence flag for the percent Δ is less than 3, declaring the percent Δ values corresponding to the $k$ and the $k$-1 samples as suspected outliers;

if the cumulative persistence flag for the percent $\Delta$ is greater than or equal to 3, making an extreme outlier determination;

if the heuristic flag is true and the percent $\Delta$ in a percent $\Delta$s vector sample $k$ is not in the same class as the $k$-1 sample, declaring the $k$ sample as a suspected outlier and setting the cumulative persistence flag for that percent $\Delta$ to 1, and examining the $k$-1 and the $k$-2 samples if both were suspect and examining the class of the $k$-1 and the $k$-2 samples if in the same class and if not, declaring the $k$-1 sample as an outlier;

if the $k$-1 and the $k$-2 samples were in the same class and if the cumulative persistence flag for that percent $\Delta$ at $k$-1 is less than 3, declaring the $k$-1 and the $k$-2 samples as outliers; and

examining the $k$-1 and the $k$-2 samples if not suspect and if the $k$-1 sample is InRange or Uncertain, declaring the $k$-1 sample as an outlier.

10. The method according to claim 9 wherein the extreme outlier determination further comprises:

forming extreme heuristic thresholds;

classifying the percent $\Delta$ in a percent $\Delta$s vector $k$-2 sample as extreme or not;

if the $k$-2 sample is not Extreme, one of the following conditions exist:

if the $k$-1 sample is Extreme and the $k$ sample is not Extreme, declaring a condition of High for the $k$-2 sample, Extreme for the $k$-1 sample, and High for the $k$ sample;

if the cumulative persistence flag for the percent $\Delta$ $k$ sample is greater than 3 and the $k$-3 sample is Extreme, declaring a condition of Extreme for the $k$-3 sample, High for the $k$-2 sample, Extreme for the $k$-1 sample, and High for the $k$ sample, wherein the trend represents a physical fault;

if either the cumulative persistence flag for the percent $\Delta$ $k$ sample is not greater than 3 or the $k$-3 sample is not Extreme, declaring a condition of not Extreme for the $k$-3 sample, High for the $k$-2 sample, Extreme for the $k$-1 sample, and High for the $k$ sample, wherein the $k$-1 sample is an outlier;

if the $k$-1 sample is not Extreme, or the $k$ sample is Extreme, declaring a physical fault;

if the $k$-2 sample is Extreme, one of the following conditions exist:

if the cumulative persistence flag for the percent $\Delta$ $k$ sample is greater than 3, examining the $k$ sample and the $k$-1, $k$-2 and $k$-3 samples;

if the $k$-1 sample or the $k$-3 sample is Extreme, declaring a physical fault;

if the $k$-1 sample is not Extreme and the $k$-3 sample is not Extreme and the $k$ sample is not Extreme, declaring the $k$-2 sample an outlier;

if the $k$-1 sample is not Extreme and the $k$-3 sample is not Extreme and the $k$ sample is Extreme, declaring a physical fault;

if the cumulative persistence flag for the percent $\Delta$ $k$ sample is 3 and the $k$-1 sample is Extreme, declaring a condition of Extreme for the $k$-2 sample, Extreme for the $k$-1 sample and High for the $k$ sample, wherein the trend represents a physical fault;

if the cumulative persistence flag for the percent $\Delta$ $k$ sample is 3 and the $k$-1 sample is Extreme, declaring a condition of Extreme for the $k$-2 sample, Extreme for the $k$-1 sample and High for the $k$ sample, wherein the trend represents a physical fault; and

if the cumulative persistence flag for the percent $\Delta$ at $k$ is 3 and the $k$-1 sample is not Extreme and the $k$ sample is not Extreme, declaring a condition of Extreme for the $k$-2 sample, High for the $k$-1 sample and High for the $k$ sample, wherein the $k$-2 sample is an outlier.

11. The method according to claim 10 wherein the threshold values are sigma (deviation) about a mean (average) level for each parameter of the percent $\Delta$ vectors.

102 — Input Data At Time k

103 — Calculate Engine Parameter Δs From Reference Baseline

104 — Identify Engine Critical Parameters

105 — Establish Heuristic Data Bands

106 — Classify Engine Parameter Δs Relative To Bands

107 — Determine Persistency For Each Parameter Δ

108 — Determine Outlier Status For Each Parameter Δ

109 — Replace Outliers With Statistical Averages

*FIG. 1*

201

Suspect Patterns

EGT   Wf   N2   N1

*FIG. 2*

301

Description Of Bands

| Symbol | Heuristic Label | Threshold |
|---|---|---|
| 302 | 303 | 304 |
| EH | Extremely High | |
| | | $K_{EXTREME}$ |
| HH | Very High | |
| | | $K_{OUTER}$ |
| H | High | |
| | | $K_{UNCERTAIN}$ |
| U | Uncertain | |
| | | $K_{INNER}$ |
| IN | Inner | |
| | | $-K_{INNER}$ |
| U | Uncertain | |
| | | $-K_{UNCERTAIN}$ |
| L | Low | |
| | | $-K_{OUTER}$ |
| LL | Very Low | |
| | | $-K_{EXTREME}$ |
| EL | Extremely Low | |

$H*$ { Very High Or Heuristic High Pts Only

Class Classification

HIGH

UNCERTAIN

IN RANGE

UNCERTAIN

LOW

*FIG. 3*

EP 1 936 461 A1

FIG. 4A

FIG. 4B

FIG. 4

EP 1 936 461 A1

EP 1 936 461 A1

```
        ┌───────┐
        │ Enter │
        └───┬───┘
            │
     ┌──────▼───────┐  402          403                    404                        405
    ╱ Zₖ(i) is InRange ╲  Yes  ┌──────────┐      ╱ Persistencyₖ₋₁(i) = 2? ╲  Yes  ┌──────────────┐
   ╲  or Uncertain?  ╱────────▶│    SET   │─────▶╲                        ╱───────▶│Confirmed Outlier│
    ╲──────┬───────╱           │Persistencyₖ(i) = 0│  ╲──────────┬───────╱         │  at k-1 and k-2 │
           │ No               └──────────┘                    │ No               └────────┬─────┘
           │                        ▲                          │                           │
           ▼                        │ No                       ▼                           │
     409  ╱────────╲    410  ╱──────────────╲       406  ╱──────────────╲  Yes  407 ┌────────────┐  │
        ╱ Heuristic Flag ╲ No  ╱ Is Zₖ(i) either ╲       ╱ Persistencyₖ₋₁(i) = 1? ╲──────▶│Confirmed Outlier│ │
        ╲   = True?    ╱──────▶╲  HH, EH, LL, EL? ╱      ╲                ╱          │   at k-1   │  │
         ╲──────┬───╱          ╲──────┬───────╱          ╲──────┬───────╱          └──────┬─────┘  │
                │ Yes                 │ Yes                      │ No                       │        │
                │                     └──────────────           │                          │        │
                │                                               └──────────────────────────┼────────┘
                │                                                                          │
                │◀──────────────────────────────────────────────                          │
                │                                                                          │
   411          ▼                    412                                                   │
     ╱──────────────╲   Yes  ┌──────────────┐        ╱──────────────╲  413            415 ┌─────────────┐
    ╱  Is Zₖ(i) and  ╲───────▶│Persistencyₖ(i) =│─────▶╲Persistencyₖ(i) ≥ 3?╱───────────────▶│Make Extreme Outlier│
    ╲   Zₖ₋₁(i) in the ╱      │Persistencyₖ₋₁(i) + 1│  ╲              ╱  Yes         │Determination│
     ╲   same class?  ╱       └──────────────┘        ╲──────┬───╱                 └──────┬──────┘
      ╲──────┬───────╱                                       │ No                         │
             │ No                                            │                            │
             │                                               │                    408 ┌──────────┐
             │                                               │                        │  Treat k  │
             │                                               │                        │Data Point │
             │                                               │                        │As No Fault│
             │                                               │                        └────┬─────┘
             ▼                                               ▼                             ▼
    - - - - - - - - - - - - - - - - - - - - - - - - - - - - - - - - - - - - - - - - - - - - -
```

*FIG. 4A*

EP 1 936 461 A1

Persistency$_k$(i) = 1 —415

Suspected
Outlier At k —416

Suspected Outliers
at k−1 and k
414

Have The Prior 2
Points (k−2, and k−1)
Been Faulted?  417

Is $Z_{k-1}$(i) and
$Z_{k-2}$(i) in the
same class?  418

Confirmed
Outlier at k−1  419

Yes → No →

No

Z$_{k-1}$(i) is InRange
or Uncertain?  422

Yes

Yes

Persistency$_{k-1}$
(i) ≥ 3?  420

Confirmed Outlier
at k−1 and k−2  421

No →

No

Confirmed Outlier
at k−1

Yes

423

End

*FIG. 4B*

FIG. 5A

FIG. 5B

FIG. 5

EP 1 936 461 A1

EP 1 936 461 A1

```
                        ┌─────────┐
                        │  Enter  │
                        └────┬────┘
                             │
                    ┌────────▼────────┐
                    │      Form       │
                    │     Extreme     │──── 502
                    │    Databands    │
                    └────────┬────────┘
                             │
      503                    │
                    ┌────────▼────────┐        No
                    │  Is  Z_{k-2}(i) │────────────────────────►
                    │    Extreme?     │
                    └────────┬────────┘
                             │ Yes
```

Is $Z_{k-2}(i)$ Extreme?

Is $Z_{k-1}(i)$ Extreme and $Z_k(i)$ Not Extreme?  — 504

Is Persistency$_k(i)$ = 3?  — 508

Is $Z_{k-1}(i)$ Extreme or $Z_{k-3}(i)$ Extreme?  — 509

Is $Z_{k-3}(i)$ Extreme and Persistency$_k(i)$ > 3?  — 506

*FIG. 5A*

EP 1 936 461 A1

*FIG. 5B*

**EP 1 936 461 A1**

## EUROPEAN SEARCH REPORT

European Patent Office

Application Number

EP 07 25 4842

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 418 481 A (UNITED TECHNOLOGIES CORP [US]) 12 May 2004 (2004-05-12) * paragraphs [0014] - [0030] * ----- | 1-8 | INV. G05B23/02 |
| X | US 2005/209823 A1 (NGUYEN PHUC L [CA] ET AL NGUYEN PHUC LUONG [CA] ET AL) 22 September 2005 (2005-09-22) * paragraphs [0029] - [0037] * ----- | 1-8 | |

TECHNICAL FIELDS SEARCHED (IPC)

G05B

The present search report has been drawn up for all claims

| Place of search | Date of completion of the search | Examiner |
|---|---|---|
| Munich | 10 April 2008 | Nicolaucig, Aldo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 936 461 A1**

## ANNEX TO THE EUROPEAN SEARCH REPORT
## ON EUROPEAN PATENT APPLICATION NO.

EP 07 25 4842

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2008

| Patent document cited in search report | | Publication date | Patent family member(s) | | Publication date |
|---|---|---|---|---|---|
| EP 1418481 | A | 12-05-2004 | DE | 60302990 T2 | 27-07-2006 |
| | | | JP | 2004150440 A | 27-05-2004 |
| | | | US | 2004088100 A1 | 06-05-2004 |
| US 2005209823 | A1 | 22-09-2005 | NONE | | |

EPO FORM P0459

For more details about this annex : see Official Journal of the European Patent Office, No. 12/82